(19) Europäisches Patentamt
European Patent Office
Office européen des brevets

(11) EP 4 020 501 A1

(12) EUROPEAN PATENT APPLICATION

(43) Date of publication:
**29.06.2022 Bulletin 2022/26**

(21) Application number: **20216701.1**

(22) Date of filing: **22.12.2020**

(51) International Patent Classification (IPC):
***H01B 3/44*** *(2006.01)* ***C08L 23/04*** *(2006.01)*
***H01B 9/00*** *(2006.01)* *H01B 1/24 (2006.01)*
*H01B 13/14 (2006.01)*

(52) Cooperative Patent Classification (CPC):
(C-Sets available)
**H01B 3/441; C08L 23/04;** H01B 1/24; H01B 13/14

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
- **POURRAHIMI, Amir Masoud**
  **417 60 Göteborg (SE)**
- **HAGSTRAND, Per-Ola**
  **444 86 Stenungsund (SE)**
- **GKOURMPIS, Thomas**
  **444 86 Stenungsund (SE)**
- **MÜLLER, Christian**
  **412 70 Göteborg (SE)**
- **XU, Xiangdong**
  **431 44 Mölndal (SE)**
- **KUMARA, Sarath**
  **20409 Peradeniya (LK)**

(74) Representative: **Dehns**
**St. Bride's House**
**10 Salisbury Square**
**London EC4Y 8JD (GB)**

(54) **POLYMER COMPOSITION FOR WIRE AND CABLE APPLICATIONS WITH ADVANTAGEOUS ELECTRICAL PROPERTIES**

(57) The invention provides a polymer composition comprising a) a polyethylene; and b) a conjugated aromatic polymer. The invention also relates to cables comprising said polymer composition and the use of the polymer composition in the manufacture of an insulation layer of cable.

EP 4 020 501 A1

(52) Cooperative Patent Classification (CPC): (Cont.)

C-Sets
**C08L 23/04, C08L 65/00**

## Description

### Field of invention

The invention relates to a polymer composition which may be used for producing an insulation layer of cable, such as a direct current (DC) power cable. In particular, the invention relates to a polymer composition which is a blend of a polyethylene and low levels of a conjugated aromatic polymer, which has surprisingly low electrical conductivity. In one embodiment, the polymer composition of the invention is used in non-crosslinked form thus avoiding the need for a crosslinking agent to be present and avoiding the need for post crosslinking and degassing procedures to remove crosslinking agent by-products.

The invention also relates to a cable, e.g. a direct current (DC) power cable, comprising the polymer composition in at least the insulation layer, as well as to a preparation process of the cable.

### Background

Polyolefins produced in a high pressure (HP) process are widely used in demanding polymer applications wherein the polymers must meet high mechanical and/or electrical requirements. For instance in power cable applications, particularly in medium voltage (MV) and especially in high voltage (HV) and extra high voltage (EHV) cable applications the electrical properties of the polymer composition have significant importance.

The electrical properties of importance may differ in different cable applications, as is the case between alternating current (AC) and direct current (DC) cable applications.

A typical power cable comprises a conductor surrounded, at least, by an inner semiconductive layer, an insulation layer and an outer semiconductive layer, in that order. The cables are commonly produced by extruding the layers on a conductor.

The polymer material in one or more of said layers is often crosslinked to improve e.g. heat and deformation resistance, creep properties, mechanical strength, chemical resistance and abrasion resistance of the polymer in the layer(s) of the cable. During a crosslinking reaction, crosslinks (bridges) are primarily formed. Crosslinking can be effected using, for example, a free radical generating compound which is typically incorporated in to the layer material prior to the extrusion of the layer(s) on a conductor. After formation of the layered cable, the cable is then subjected to a crosslinking step to initiate the radical formation and thereby crosslinking reaction.

Peroxides are very commonly used as free radical generating compounds. The resulting decomposition products of peroxides may include volatile by-products which are often undesired, since they may have a negative influence on the electrical properties of the cable. Therefore the volatile decomposition products such as methane are conventionally reduced to a minimum or removed after crosslinking and cooling step. Such a removal step, generally known as a degassing step, is time and energy consuming causing extra costs.

Cross-linked high pressure LDPE has been used for extruded HVDC cables for about 15 years. The latest products developed are approved for 640 kV cables. The industry however is demanding even higher voltages. With such higher voltages comes the challenge of developing materials which can withstand the heat generated within the cables. In order to reach even higher voltage levels, insulation materials with even lower electrical conductivity are needed to reduce heat formation and prevent thermal runaway.

The DC electrical conductivity is thus an important material property for insulating materials, in particular those designed for use in high voltage direct current (HV DC) cables. First of all, the strong temperature and electric field dependence of this property will influence the electric field. The second issue is the fact that heat will be generated inside the insulation by the electric leakage current flowing between the inner and outer semiconductive layers. This leakage current depends on the electric field and the electrical conductivity of the insulation. High conductivity of the insulating material can even lead to thermal runaway under high stress/high temperature conditions. The conductivity must therefore be sufficiently low to avoid thermal runaway.

Accordingly, in HV DC cables, the insulation is heated by the leakage current. For a specific cable design the heating is proportional to the insulation conductivity $\times$ (electrical field)$^2$. Thus, if the voltage is increased, far more heat will be generated unless the insulation conductivity is minimised.

There are high demands to increase the voltage of a power cable, particularly of a direct current (DC) power cable, and thus a continuous need to find alternative polymer compositions which have the necessary properties required for demanding power cable applications.

Our invention seeks to minimise the electrical conductivity of the polymer composition. One solution is that compositions comprising a mixture of a polyethylene such as an LDPE with low levels of a conjugated aromatic polymer offers remarkably low conductivity even without crosslinking.

WO2017/220616 describes the use of polymer blends comprising LDPE and certain conjugated aromatic polymers. The blends improve both thermomechanical and electrical properties of the base polymer but require the use of

comparatively high levels of the conjugated aromatic polymer.

The inventors have now found that polymer compositions comprising a blend of a polyethylene with very low levels of a conjugated aromatic polymer, such as a polythiophene, offers remarkably low conductivity, especially at higher electrical fields. The polymer compositions can be used to prepare, for example, the insulation layer in a direct current (DC) power cable, offering cables which can operate at voltages higher than possible today and cables which can operate at higher electrical fields than are possible today.

**Summary of Invention**

Thus viewed from one aspect the invention provides a polymer composition comprising

a) polyethylene; and
b) a conjugated aromatic polymer;

wherein the conjugated aromatic polymer b) is present in an amount of 0.0001 to 0.005 wt% relative to the total weight of the polymer composition as a whole.

In particular, the polymer composition of the invention comprises an LDPE and a polythiophene.

Viewed from another aspect, the invention provides an insulation layer, e.g. of a cable, comprising a polymer composition as hereinbefore defined.

Viewed from another aspect, the invention provides a cable comprising one or more conductors surrounded by at least an insulation layer, wherein said insulation layer comprises a polymer composition as hereinbefore defined.

In particular, the cable of the invention is a direct current (DC) power cable, preferably operating at or capable of operating at 320 kV or more, such as 600 kV or more.

Viewed from another aspect the invention provides a process for producing a cable comprising the steps of:

- applying on a conductor, preferably by (co)extrusion, at least an insulation layer wherein the insulation layer comprises a polymer composition as hereinbefore defined. In one embodiment the insulation layer may be crosslinked. In one embodiment the insulation layer may be non-crosslinked.

Viewed from another aspect the invention provides the use of a polymer composition as hereinbefore defined in the manufacture of an insulation layer in a cable.

**Detailed Description of Invention**

The present invention requires the combination of a polyethylene such a low density polyethylene (LDPE) polymer with a conjugated aromatic polymer in a polymer composition. The polymer composition unexpectedly has advantageous electrical properties, even under high stress.

Unexpectedly, the combination of a conjugated aromatic polymer with the polyethylene has advantageous electrical properties even at the very low levels of conjugated aromatic polymer present. The electrical conductivity of the polymer composition of the invention is markedly lower under high electrical field, e.g. a field of 25 kV/mm or more such as 25kV/mm to 60 kV/mm.

The polymer composition also has reduced, i.e. low, electrical conductivity. "Reduced" or "low" electrical conductivity as used herein interchangeably means that the value obtained from the DC conductivity measurement as defined below under "Determination methods" is low, i.e. reduced. The low electrical conductivity is beneficial for minimising undesired heat formation, e.g. in an insulation layer of a power cable.

Moreover and unexpectedly, the polymer composition has improved electrical properties without the need for crosslinking. Non cross-linked polymer compositions or cable layers are regarded as thermoplastic.

**Polyethylene**

The polyethylene polymer used in the polymer composition of the invention may be a homopolymer or a copolymer. If it is a copolymer, at least 60 wt% of the monomers present in the polyethylene are ethylene monomer residues. Suitable polyethylenes are low pressure polyethylenes such as high density polyethylene (having a density of 940 kg/$m^3$ or more, e.g. 940 to 980 kg/$m^3$), medium density polyethylene (having a density of 930 to 940 kg/$m^3$, linear low density polyethylene (having a density of 910 to 930 kg/$m^3$), or very low density polyethylene (having a density of 895 to 910 kg/$m^3$).

It is however preferred if the polyethylene is a low density polyethylene.

**Low Density Polyethylene (LDPE)**

Low density polyethylene, LDPE, is a polyethylene produced in a high pressure process. Typically the polymerization of ethylene and optional further comonomer(s) in the high pressure process is carried out in the presence of an initiator(s). The meaning of LDPE polymer is well known and documented in the literature.

Although the term LDPE is an abbreviation for low density polyethylene, the term is understood not to limit the density range, but covers the LDPE-like HP polyethylenes with low, medium and higher densities. The term LDPE describes and distinguishes a high pressure polyethylene from polyethylenes produced in the presence of an olefin polymerisation catalyst. LDPEs have certain typical features, such as different branching architecture.

A "non-crosslinked" low density polyethylene (LDPE) means that the LDPE present in a layer of a final DC cable (in use) is not crosslinked and is thus thermoplastic.

The LDPE may be a low density homopolymer of ethylene (referred herein as LDPE homopolymer) or a low density copolymer of ethylene with one or more comonomer(s) (referred herein as LDPE copolymer). The one or more comonomers of the LDPE copolymer may be selected from the group consisting of polar comonomer(s), non-polar comonomer(s) or from a mixture of the polar comonomer(s) and non-polar comonomer(s). Moreover, said LDPE homopolymer or LDPE copolymer may optionally be unsaturated.

In embodiments wherein the LDPE is non-crosslinked, the LDPE is preferably an LDPE homopolymer. Alternatively, in embodiments wherein the LDPE is crosslinked, the LDPE is preferably an LDPE copolymer, in particular an LDPE copolymer of ethylene with one or more comonomers, such as octadiene.

In one embodiment, the LDPE is an LDPE homopolymer.

As a polar comonomer for the LDPE copolymer, comonomer(s) containing hydroxyl group(s), alkoxy group(s), carbonyl group(s), carboxyl group(s), ether group(s) or ester group(s), or a mixture thereof, can be used. For example, comonomer(s) containing carboxyl and/or ester group(s) may are used as said polar comonomer. Preferred polar comonomer(s) are acrylate(s), methacrylate(s) or acetate(s), or any mixtures thereof.

If present in said LDPE copolymer, the polar comonomer(s) may be selected from the group of alkyl acrylates, alkyl methacrylates or vinyl acetate, or a mixture thereof. For example, said polar comonomers can be selected from $C_1$- to $C_6$-alkyl acrylates, $C_1$- to $C_6$-alkyl methacrylates or vinyl acetate. In one embodiment, said LDPE copolymer is a copolymer of ethylene with a $C_1$- to $C_4$-alkyl acrylate, such as methyl, ethyl, propyl or butyl acrylate, or vinyl acetate, or any mixture thereof.

As the non-polar comonomer(s) for the LDPE copolymer, comonomer(s) other than the above defined polar comonomers can be used. For example, the non-polar comonomers are other than comonomer(s) containing hydroxyl group(s), alkoxy group(s), carbonyl group(s), carboxyl group(s), ether group(s) or ester group(s). One group of non-polar comonomer(s) includes those comprising (e.g. consisting of) monounsaturated (= one double bond) comonomer(s), preferably olefins, preferably alpha-olefins, more preferably $C_3$ to $C_{10}$ alpha-olefins, such as propylene, 1-butene, 1-hexene, 4-methyl-1-pentene, styrene, 1-octene, 1-nonene; polyunsaturated (= more than one double bond) comonomer(s); a silane group containing comonomer(s); or any mixtures thereof. The polyunsaturated comonomer(s) are further described below in relation to unsaturated LDPE copolymers.

If the LDPE polymer is a copolymer, it may comprise 0.001 to 35 wt.-%, such as less than 30 wt.-%, for example less than 25 wt.-%, of one or more comonomer(s) relative to the total weight of the copolymer as a whole. Example ranges include 0.5 to 10 wt%, such as 0.5 to 5 wt% comonomer.

The LDPE polymer, may optionally be unsaturated, i.e. may comprise carbon-carbon double bonds (-C=C-). Example "unsaturated" LDPEs contain carbon-carbon double bonds/1000 carbon atoms in a total amount of at least 0.4/1000 carbon atoms. If a non-crosslinked LDPE is used in the final cable, then the LDPE is typically not unsaturated as defined above. By not unsaturated is meant that the C=C content may be less than 0.2/1000 carbon atoms, such as 0.1/1000C atoms or less.

As well known, the unsaturation can be provided to the LDPE polymer by means of the comonomers, a low molecular weight (Mw) additive compound, such as a crosslinking booster, chain transfer agent (CTA) or scorch retarder additive, or any combinations thereof. The total amount of double bonds means herein double bonds added by any means. If two or more above sources of double bonds are chosen to be used for providing the unsaturation, then the total amount of double bonds in the LDPE polymer means the sum of the double bonds present. Any double bond measurements are carried out prior to optional crosslinking.

The term "total amount of carbon-carbon double bonds" refers to the combined amount of double bonds which originate from vinyl groups, vinylidene groups and *trans*-vinylene groups, if present.

If an LDPE homopolymer is unsaturated, then the unsaturation can be provided e.g. by a chain transfer agent (CTA), such as propylene, and/or by polymerization conditions. If an LDPE copolymer is unsaturated, then the unsaturation can be provided by one or more of the following means: by a chain transfer agent (CTA), by one or more polyunsaturated comonomer(s) or by polymerisation conditions. It is well known that selected polymerisation conditions such as peak temperatures and pressure, can have an influence on the unsaturation level. In case of an unsaturated LDPE

copolymer, it may be for example an unsaturated LDPE copolymer of ethylene with at least one polyunsaturated comonomer, and optionally with other comonomer(s), such as polar comonomer(s), e.g. an acrylate or acetate comonomer(s). In one embodiment, an unsaturated LDPE copolymer is an unsaturated LDPE copolymer of ethylene with at least polyunsaturated comonomer(s).

The polyunsaturated comonomers may consist of a straight carbon chain with at least 8 carbon atoms and at least 4 carbons between the non-conjugated double bonds, of which at least one is terminal. For example, the polyunsaturated comonomer can be a diene, such as a diene which comprises at least eight carbon atoms, the first carbon-carbon double bond being terminal and the second carbon-carbon double bond being non-conjugated to the first one. Example dienes are selected from $C_8$ to $C_{14}$ non-conjugated dienes or mixtures thereof, more preferably selected from 1,7-octadiene, 1,9-decadiene, 1,11-dodecadiene, 1,13-tetradecadiene, 7-methyl-1,6-octadiene, 9-methyl-1,8-decadiene, or mixtures thereof. In some embodiments, the diene is selected from 1,7-octadiene, 1,9-decadiene, 1,11-dodecadiene, 1,13-tetradecadiene, or any mixture thereof, however, without limiting to above dienes.

It is well known that e.g. propylene can be used as a comonomer or as a chain transfer agent (CTA), or both, whereby it can contribute to the total amount of the carbon-carbon double bonds, e.g. to the total amount of the vinyl groups. Herein, when a compound which can also act as comonomer, such as propylene, is used as CTA for providing double bonds, then said copolymerisable comonomer is not calculated to the comonomer content.

If LDPE polymer is unsaturated, then it may have a total amount of carbon-carbon double bonds, which originate from vinyl groups, vinylidene groups and *trans*-vinylene groups, if present, of more than 0.4/1000 carbon atoms, such as of more than 0.5/1000 carbon atoms. The upper limit of the amount of carbon-carbon double bonds present in the polyolefin is not limited and may for example be less than 5.0/1000 carbon atoms, such as less than 3.0/1000 carbon atoms.

In some embodiments, e.g. wherein higher crosslinking level with the low peroxide content is desired, the total amount of carbon-carbon double bonds, which originate from vinyl groups, vinylidene groups and *trans*-vinylene groups, if present, in the unsaturated LDPE, may be higher than 0.40/1000 carbon atoms, such as higher than 0.50/1000 carbon atoms, for example higher than 0.60/1000 carbon atoms.

If the LDPE is unsaturated LDPE as defined above, it may contain at least vinyl groups and the total amount of vinyl groups can be higher than 0.05/1000 carbon atoms, such as higher than 0.08/1000 carbon atoms, for example higher than 0.11/1000 carbon atoms. In one embodiment, the total amount of vinyl groups is of lower than 4.0/1000 carbon atoms. The LDPE a) prior to crosslinking, may contain vinyl groups in total amount of more than 0.20/1000 carbon atoms, such as more than 0.30/1000 carbon atoms.

In an alternative embodiment the LDPE of the invention is not unsaturated and possesses less than 0.2 C=C/1000 C atoms.

The LDPE polymer of the invention typically has a high melting point, which may be of importance especially for a thermoplastic insulation material. Melting points of 112°C or more are envisaged, such as 114°C or more, especially 116°C or more, such as 112 to 125°C.

Typically, in wire and cable (W&C) applications, the density of LDPE a) is higher than 860 $kg/m^3$. The density of the LDPE homopolymer or copolymer is usually not higher than 960 $kg/m^3$, and may be in the range from 900 to 945 $kg/m^3$, especially in the range from 905 to 930 $kg/m^3$.

The $MFR_2$ (2.16 kg, 190 °C) of the LDPE polymer, can be from 0.01 to 50 g/10min, such as from 0.05 to 30.0 g/10 min, for example from 0.1 to 20 g/10min, especially from 0.2 to 10 g/10min. In some embodiments, the $MFR_2$ may be 0.5 to 3.0 g/10 min.

The LDPE polymer is produced at high pressure by free radical initiated polymerisation (referred to as high pressure (HP) radical polymerization). The HP reactor can be e.g. a well-known tubular or autoclave reactor or a mixture thereof, especially a tubular reactor. The high pressure (HP) polymerisation and the adjustment of process conditions for further tailoring the other properties of the polyolefin depending on the desired end application are well known and described in the literature, and can readily be used by a skilled person. Suitable polymerisation temperatures range up to 400 °C, such as from 80 to 350°C and pressure from 70 MPa, for example 100 to 400 MPa, especially from 100 to 350 MPa. Pressure can be measured at least after compression stage and/or after the tubular reactor. Temperature can be measured at several points during all steps.

After the separation the obtained LDPE is typically in a form of a polymer melt which is normally mixed and pelletized in a pelletising section, such as pelletising extruder, arranged in connection to the HP reactor system. Optionally, additive(s), such as antioxidant(s), can be added in this mixer in a known manner.

Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

When an unsaturated LDPE copolymer of ethylene is prepared, then, as well known, the carbon-carbon double bond content can be adjusted by polymerising the ethylene e.g. in the presence of one or more polyunsaturated comonomer(s), chain transfer agent(s), or both, using the desired feed ratio between monomer, e.g. ethylene, and polyunsaturated comonomer and/or chain transfer agent, depending on the nature and amount of C-C double bonds desired for the unsaturated LDPE copolymer. I.a. WO93/08222 describes a high pressure radical polymerisation of ethylene with polyunsaturated monomers. As a result the unsaturation can be uniformly distributed along the polymer chain in random copolymerisation manner.

The LDPE of the invention is not new.

**Conjugated Aromatic Polymer**

The conjugated aromatic polymer is a polymer which contains a sequence of alternating single and unsaturated (e.g. double or triple) carbon-carbon bonds. The polymer comprises at least one repeating aromatic moiety and at least some of the alternating single and unsaturated bonds are part of this aromatic structure. In one embodiment, all the unsaturated bonds are part of an aromatic system. In a further embodiment, the conjugated polymer may comprise a combination of unsaturated bonds which are part of an aliphatic system and unsaturated bonds which are part of an aromatic system.

In general, any suitable conjugated aromatic polymer known in the art may be used in the polymer compositions of the invention.

The conjugated aromatic polymer may be a homopolymer or a copolymer. Copolymers may be alternating copolymers of two or more different aromatic monomer moieties or a mixture or aromatic and aliphatic monomers. The conjugated aromatic polymer is usually a homopolymer.

Examples of suitable aromatic polymers include polyfluorenes, polyphenylenes, poly(phenylene vinylene), polypyrenes, polyazulenes, polynaphthalenes, polypyrroles, polycarbazoles, polyindoles, polyazepines, polyanilines, polythiophenes, polypyrroles, polyfuranes, polyselenophenes, polythienothiophenes, polybenzodithiophenes, polycarbazoles, polydithieno-siloles, polybenzothiazoles, polytriarylamines, polyquinoxalines, polyisoindigos, poly(perylene diimides), poly(naphthalene diimides), polycyclopentadithiophenes, polydithieno-pyrroles, polyquinoxalines, polythienopyrazines, polynaphthothiadiazoles, polybenzothiadiazoles, polythienopyrrolediones, polydiketopyrolopyrroles, polybenzooxadiazoles, polyfullerenes and polyisothianaphthalenes, or copolymers thereof.

In one embodiment, the conjugated polymer is a polythiophene. The polythiophene is a polymer containing at least two thiophene repeating units. Polythiophenes are conjugated systems which are typically semiconductors in their pristine, undoped state. The materials become conducting when electrons are added or removed via doping with e.g. oxygen or other oxidising agents.

Any suitable polythiophene known in the art may be used in the polymer compositions of the invention. The thiophene repeating unit may comprise a single thiophene ring, or more than one thiophene ring with differing substituents. Moreover, it is possible for the thiophene ring to be fused to a second ring system which may be aromatic or aliphatic.

Typically, the thiophene is a homopolymer with the general formula (I):

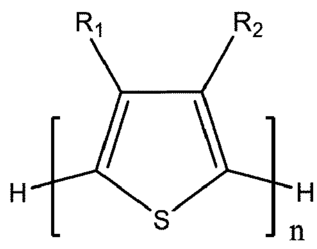

(I)

wherein $R_1$ and $R_2$ are each independently selected from the group consisting of hydrogen, halo (e.g. fluoro), alkoxy, linear or branched $C_{1-20}$ alkyl group or a $C_{3-12}$ cycloalkyl group and optionally substituted $C_{6-20}$ aryl groups; and wherein n is an integer in the range 2 to 1000.

The term "alkyl" is intended to cover linear or branched alkyl groups such as all isomers of propyl, butyl, pentyl and hexyl. In all embodiments, the alkyl group is usually linear. Example cycloalkyl groups include cyclopentyl and cyclohexyl.

Examples of the substituted aryl groups include aryl groups substituted with at least one substituent selected from halogens, alkyl groups having 1 to 8 carbon atoms, acyl groups, or a nitro group. Typical aryl groups include substituted and unsubstituted phenyl, benzyl, phenylalkyl or naphthyl.

In some embodiments n may be an integer in the range 2 to 500, such as 2 to 250.

In one embodiment, $R_1$ is hydrogen.

In another embodiment, $R_1$ is hydrogen and $R_2$ is hydrogen or hexyl, such as hexyl (i.e. the polythiophene is

poly-3-hexylthiophene (P3HT)).

The polythiophene may be regio-regular. By regio-regular we mean that the momoners of the polythiophene are coupled together in a regular fashion throughout the polymer. Thiophene monomers can link at either the 2-position or 5-position of the ring, giving four possible regio-regular coupling patterns:

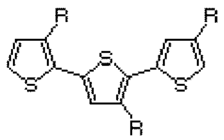

HT-HT

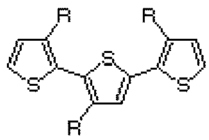

HH-TH

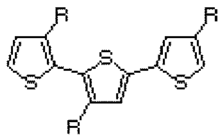

HH-TT

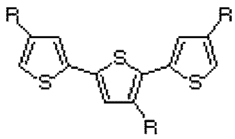

TT-HT

wherein HH means head-head coupling, HT means head-tail coupling, TT means tail-tail coupling and TH means tail-head coupling.

The polythiophene used in the polymer compositions of the invention usually exhibits head-tail coupling. Typically, the polythiophene has a head-tail regioregularity of greater than 95%, even more preferably greater than 98%, when measured by $^1H$ NMR.

The number average molecular weight (Mn) of the polythiophene is typically in the range 5000 to 150000, such as 10000 to 100000, especially 30000 to 75000.

The molecular weight distribution (Mw/Mn) of the polythiophene may be in the range 1 to 10, such as 2 to 5.

**Polymer Composition**

The polymer composition of the invention comprises

a) polyethylene; and
b) a conjugated aromatic polymer.

Whilst it is within the ambit of the invention for the polymer composition to contain further polymer components in addition to the polyethylene a) and conjugated aromatic polymer b), in one embodiment the polymer composition of the invention can consist of LDPE a) and conjugated aromatic polymer b) as the sole polymer components. It will be appreciated that a polymer composition consisting of components a) and b) as the sole polymer components does not exclude the possibility for the composition to further comprise standard polymer additives such as scorch retarders, water tree retarders, antioxidants and so on.

The polyethylene a) may be present in an amount of at least 90 wt%, such as at least 95 wt %, for example at least 97.5 wt%, especially 98 to 99.9999 wt%, relative to the total weight of the polymer composition as a whole.

The conjugated aromatic polymer b) is present in an amount of 0.0001 to 0.005 wt%, such as 0.0002 to 0.0025 wt%, for example 0.00025 to 0.002 wt% relative to the total weight of the polymer composition as a whole. In one embodiment, the conjugated aromatic polymer b) is present in an amount of 0.0001 to 0.0009 wt%, such as in an amount of 0.0002 to 0.00075 wt% relative to the total weight of the polymer composition as a whole.

At these low levels of conjugated aromatic polymer, it is possible to use a masterbatch to carry the conjugated aromatic polymer. The masterbatch comprises a carrier and the conjugated aromatic polymer. The carrier is often a polyethylene polymer and can be the same or similar to that used in part a). The amount of masterbatch added to the polymer composition will depend on the concentration of the conjugated aromatic polymer within the masterbatch. Obviously, the amount of masterbatch added is sufficient to generate the wt% of conjugated aromatic polymer required herein.

The polymer composition of the invention preferably has an electrical conductivity of 1.0E-13 S/m or less, more preferably of 7.5E-14 S/m or less, more preferably of 7.5E-14 to 1.0E-15 S/m when measured according to DC conductivity method as described under "Determination Methods".

The electrical conductivity observed is particularly low at higher electrical fields, e.g. of 25 kV/mm or more.

The polymer composition of the invention is typically prepared by mixing components a) and b). Mixing may take place by any known method in the art, such as melt-mixing.

The invention enables the formation of cables. The polymer composition is ideally heat treated once prepared. This may allow for the creep properties to be optimised. The term "heat treated" in the context of the invention means that the polymer composition has been heated to a temperature above the melting temperature of the conjugated aromatic polymer and then allowed to cool back to room temperature. Temperatures considered sufficient to melt the conjugated aromatic polymer may typically be in the range of at least 150 °C, such as at least 200 °C, e.g. at least 250 °C. The temperature for the heat treatment may be no more than 350 °C, such as no more than 300 °C. Cooling may take place at a cooling rate of between 1° C./min and 25° C./min, for example less than 5°C per min. By "room temperature" we usually mean a temperature in the range in the range 12 to 35 °C.

**End uses and end applications of the polymer composition of invention**

The polymer composition of the invention can be used for producing an insulation layer of a cable, such as a direct current (DC) power cable, as defined above, below or in the claims.

The invention thus further provides a cable comprising one or more conductors surrounded by at least an insulation layer, wherein said insulation layer comprises a polymer composition as hereinbefore defined. For example, the cable typically comprises at least an inner semiconductive later, an insulation layer and an outer semiconductive layer, in that order, wherein said insulation layer comprises a polymer composition as hereinbefore defined

The cable of the invention is preferably a DC power cable. A DC power cable is defined to be a DC cable transferring energy operating at any voltage level, typically operating at voltages higher than 1 kV. The DC power cable can be a low voltage (LV), a medium voltage (MV), a high voltage (HV) or an extra high voltage (EHV) DC cable, which terms, as well known, indicate the level of operating voltage. The polymer may, for example, be used in the insulation layer for a DC power cable operating at voltages higher than 36 kV, such as a HV DC cable. For HV DC cables the operating voltage is defined herein as the electric voltage between ground and the conductor of the high voltage cable.

In one embodiment, the HV DC power cable of the invention is one operating at voltages of 40 kV or higher, even at voltages of 50 kV or higher. For example, the HV DC power cable operates at voltages of 60 kV or higher. The invention is also highly feasible in very demanding cable applications and further cables of the invention are HV DC power cable operating at voltages higher than 70 kV. Voltages of 100 kV or more are targeted, such as 200 kV or more, such as 300 kV or more, especially 400 kV or more, more especially 500 kV or more. Voltages of 600KV or more, such as 620 kV to 1000 kV are also envisaged. The upper limit is not limited. The practical upper limit can be up to 1500 kV, such as 1100 kV. The cables of the invention operate well therefore in demanding extra HV DC power cable applications operating 400 to 850 kV, such as 600 to 850 kV.

The cable of the invention, such as a DC cable, typically comprises an inner semiconductive layer comprising a first semiconductive composition, an insulation layer comprising the polymer composition of the invention and an outer semiconductive layer comprising a second semiconductive composition, in that order.

The polymer composition of the invention is used in the insulation layer of the cable. Ideally, the insulation layer comprises 95 wt% of the polymer composition of the invention or more such as 98 wt% of the polymer composition or more, e.g. 99 wt% of the polymer composition or more. In one embodiment the insulation layer consists of the polymer composition of the invention. In one embodiment, the only polymer component used in the insulation layer of the cables of the invention is polyethylene a). It will be appreciated that the insulation layer may contain standard polymer additives such as scorch retarders, water tree retarders, antioxidants and so on. These are not excluded by the term consists essentially of. Note also that these additives may be added as part of a masterbatch and hence carried on a polymer carrier. The use of masterbatch additives is not excluded by the term consists essentially of.

The insulation layer can have a beneficial low electrical conductivity when it is crosslinked with a crosslinking agent. The insulation layer of the cables of the invention can thus optionally be crosslinkable. In one embodiment the insulation layer is not crosslinked.

The term crosslinkable means that the insulation layer can be crosslinked using a crosslinking agent before use. The insulation layer will need to comprise a crosslinking agent in order to be crosslinkable, typically a free radical generating agent. The crosslinked polymer composition has a typical network, i.a. interpolymer crosslinks (bridges), as well known in the field.

If the insulation layer is crosslinked, any parameter of the insulation layer is ideally measured on the crosslinked cable unless otherwise indicated. Crosslinking may contribute to the mechanical properties and the heat and deformation resistance of the polymer composition.

In embodiments, wherein the insulation layer comprises no crosslinking agent, the electrical conductivity as described under the "Determination method" is measured from a sample of polymer composition forming the insulation layer which is non-crosslinked (i.e. does not contain a crosslinking agent and has not been crosslinked with a crosslinking agent). In embodiments wherein the insulation layer is crosslinked with a crosslinking agent, then the electrical conductivity is measured from a sample of the crosslinked polymer composition (i.e. a sample of the polymer composition is first crosslinked with the crosslinking agent initially present and then the electrical conductivity is measured from the obtained

crosslinked sample).

The amount of the crosslinking agent used, if present, can vary within the ranges given below. For example a peroxide may be used in an amount of 0 to 110 mmol -O-O-/kg polymer composition of the insulation layer, such as 0 to 90 mmol -O-O-/kg polymer composition (corresponds 0 to 2.4 wt% of dicumyl peroxide based on the polymer composition), for example of 0 to 37 mmol -O-O-/kg polymer composition, especially of 0 to 35 mmol -O-O-/kg polymer composition, such as of 0 to 34 mmol -O-O-/kg polymer composition, for example of 0 to 33 mmol -O-O-/kg polymer composition, especially from 0 to 30 mmol -O-O-/kg polymer composition, such as from 0 to 20 mmol -O-O-/kg polymer composition, for example from 0 to 10.0 mmol -O-O-/kg polymer composition, especially from 0 to 7.0 mmol -O-O-/kg polymer composition, such as less than 5.0 mmol -O-O-/kg polymer composition, for example the polymer composition comprises no crosslinking agent (= 0wt% of added crosslinking agent). The insulation layer is thus ideally free of by-products of the decomposition of the peroxide.

The lower limit of the crosslinking agent, if present, is not limited and can be at least 0.1 mmol -O-O-/kg polymer composition in the insulation layer, such as at least 0.5 mmol -O-O-/kg polymer composition, for example at least 5.0 mmol -O-O-/kg polymer composition. The lower peroxide content can shorten the required degassing step of the produced and crosslinked cable, if desired.

The unit "mmol -O-O-/kg polymer composition" means herein the content (mmol) of peroxide functional groups per kg polymer composition, when measured from the polymer composition prior to crosslinking. For instance the 35 mmol -O-O-/kg polymer composition corresponds to 0.95 wt% of the well-known dicumyl peroxide based on the total amount (100 wt%) of the polymer composition.

The polymer composition may comprise one type of peroxide or two or more different types of peroxide, in which case the amount (in mmol) of -O-O-/kg polymer composition, as defined above, below or in claims, is the sum of the amount of -O-O-/kg polymer composition of each peroxide type. As non-limiting examples of suitable organic peroxides, di-tert-amylperoxide, 2,5-di(tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, butyl-4,4-bis(tert-butylperoxy)-valerate, 1,1-bis(tert-butylperoxy)-3,3,5-trimethylcyclohexane, tert-butylperoxybenzoate, dibenzoylperoxide, bis(tert butylperoxyisopropyl)benzene, 2,5-dimethyl-2,5-di(benzoylperoxy)hexane, 1,1-di(tertbutylperoxy)cyclohexane, 1,1-di(tert amylperoxy)cyclohexane, or any mixtures thereof, can be mentioned. For example, the peroxide may be selected from 2,5-di(tert-butylperoxy)-2,5-dimethylhexane, di(tert-butylperoxyisopropyl)benzene, dicumylperoxide, tert-butylcumylperoxide, di(tert-butyl)peroxide, or mixtures thereof. In one embodiment, the peroxide is dicumylperoxide.

In an alternative embodiment the insulation layer is not crosslinked. In such cases, the insulation layer will generally comprise no crosslinking agent. The prior art drawbacks relating to the use of a crosslinking agent in a cable layer can therefore be avoided. Naturally, the non crosslinked embodiment also simplifies the cable production process. As no crosslinking agent is required, the raw material costs are lower. Also, it is generally required to degas a crosslinked cable layer to remove the by-products of the peroxide after crosslinking. Where the material is not crosslinked, no such degassing step is required.

The insulation layer may contain, in addition to the polymer composition and the optional peroxide, further component(s) such as additives (such as any of antioxidant(s), scorch retarder(s) (SR), crosslinking booster(s), stabiliser(s), processing aid(s), flame retardant additive(s), water tree retardant additive(s), acid or ion scavenger(s), inorganic filler(s), dielectric liquids and voltage stabilizer(s), as known in the polymer field.

The insulation layer may therefore comprise conventionally used additive(s) for W&C applications, such as one or more antioxidant(s) and optionally one or more scorch retarder(s), for example at least one or more antioxidant(s). The used amounts of additives are conventional and well known to a skilled person, e.g. 0.1 to 1.0 wt%.

As non-limiting examples of antioxidants e.g. sterically hindered or semi-hindered phenols, aromatic amines, aliphatic sterically hindered amines, organic phosphites or phosphonites, thio compounds, and mixtures thereof, can be mentioned.

In one embodiment, the insulation layer does not comprise a carbon black. The insulation layer generally does not comprise flame retarding additive(s), e.g. a metal hydroxide containing additives in flame retarding amounts.

The insulation layer of the cable of the invention preferably has an electrical conductivity of 1.0E-13 S/m or less, more preferably of 7.5E-14 S/m or less, more preferably of 7.5E-14 to 1.0E-15 S/m, when measured according to DC conductivity method as described under "Determination Methods".

The cable of the invention may also contain inner and outer semiconductive layers. These can be made of any conventional material suitable for use in these layers. The inner and the outer semiconductive compositions can be different or identical and may comprise a polymer(s) which is, for example, a polyolefin or a mixture of polyolefins and a conductive filler, such as carbon black. Suitable polyolefin(s) are e.g. polyethylene produced in a low pressure process or a polyethylene produced in a HP process (LDPE). The general polymer description as given above in relation to the LDPE a) applies also for the suitable polymers for semiconductive layers. The carbon black can be any conventional carbon black used in the semiconductive layers of a DC power cable, such as in the semiconductive layer of a DC power cable. The carbon black may have one or more of the following properties: a) a primary particle size of at least 5 nm

which is defined as the number average particle diameter according ASTM D3849-95a, dispersion procedure D b) iodine number of at least 30 mg/g according to ASTM D1510, c) oil absorption number of at least 30 m1/100g which is measured according to ASTM D2414. Non-limiting examples of carbon blacks are e.g. acetylene carbon black, furnace carbon black and Ketjen carbon black, such as furnace carbon black and acetylene carbon black. The polymer composition can comprise 10 to 50 wt% carbon black, based on the weight of the Semiconductive composition.

In one embodiment, the outer semiconductive layer is cross-linked. In another embodiment, the inner semiconductive layer is non-crosslinked. For example, the inner semiconductive layer and the insulation layer may remain non crosslinked where the outer semiconductive layer is crosslinked. A peroxide crosslinking agent can therefore be provided in the outer semiconductive layer only.

The cable comprises one or more conductors. Each conductor may comprise one or more conductors, .e.g. wires. For example, each conductor is an electrical conductor and comprises one or more metal wires. Cu wire is preferred.

As well known the cable can optionally comprise further layers, e.g. screen(s), a jacketing layer(s), other protective layer(s) or any combinations thereof.

**Cable Manufacture**

The invention also provides a process for producing a cable comprising the steps of

- applying on a conductor, such as by (co)extrusion, at least an insulation layer, wherein the insulation layer comprises a polymer composition comprising an LDPE and a conjugated aromatic polymer. In one embodiment the process comprises the steps of
- applying on a conductor, such as by (co)extrusion, an inner semiconductive layer, an insulation layer and an outer semiconductive layer, in that order, wherein the insulation layer comprises a polymer composition comprising an LDPE and a conjugated aromatic polymer. The insulation layer may be not crosslinked.

The process may optionally comprise the steps of crosslinking one or both of the inner semiconductive layer or outer semiconductive layer, without crosslinking the insulation layer. In one embodiment, the outer semiconductive layer is crosslinked, without crosslinking the insulation layer. Furthermore, the inner semiconductive layer may be not crosslinked. Thus, the semi-conductive layer may comprise a peroxide which enables the crosslinking of the semiconductive composition.

In one embodiment, a cable is produced, wherein the process comprises the steps of

(a) - providing and mixing, such as melt mixing in an extruder, an optionally crosslinkable first semiconductive composition comprising a polymer, a carbon black and optionally further component(s) for the inner semiconductive layer,

- providing and mixing, such as melt mixing in an extruder, the optionally crosslinkable polymer composition of the invention; and
- providing and mixing, such as melt mixing in an extruder, a second semiconductive composition which is optionally crosslinkable and comprises a polymer, a carbon black and optionally further component(s) for the outer semiconductive layer,

(b) applying on a conductor, preferably by coextrusion,

- a melt mix of the first semiconductive composition obtained from step (a) to form the inner semiconductive layer,
- a meltmix of polymer composition of the invention obtained from step (a) to form the insulation layer, and
- a meltmix of the second semiconductive composition obtained from step (a) to form the outer semiconductive layer, and

(c) optionally crosslinking at crosslinking conditions one or both of the first semiconductive composition of the inner semiconductive layer and the second semiconductive composition of the outer semiconductive layer, of the obtained cable, and optionally crosslinking the insulation layer, for example without crosslinking the insulation layer.

In step (c) the second semiconductive polymer composition of the outer semiconductive layer may be crosslinked, for example crosslinked without crosslinking the insulation layer. Furthermore, the second semiconductive polymer composition of the outer semiconductive layer can be crosslinked, without crosslinking the insulation layer or the first semiconductive composition of the inner semiconductive layer.

Melt mixing means mixing above the melting point of at least the major polymer component(s) of the obtained

mixture and is carried out for example, without limiting to, in a temperature of at least 15 °C above the melting or softening point of polymer component(s).

The term "(co)extrusion" means herein that in case of two or more layers, said layers can be extruded in separate steps, or at least two or all of said layers can be coextruded in a same extrusion step, as well known in the art. The term "(co)extrusion" means herein also that all or part of the layer(s) are formed simultaneously using one or more extrusion heads. For instance a triple extrusion can be used for forming three layers. In case a layer is formed using more than one extrusion heads, then for instance, the layers can be extruded using two extrusion heads, the first one for forming the inner semiconductive layer and the inner part of the insulation layer, and the second head for forming the outer insulation layer and the outer semiconductive layer.

The polymers required to manufacture the cable of the invention may be provided to the cable production process in form of powder, grain or pellets. Pellets mean herein generally any polymer product which is formed from reactor-made polymer (obtained directly from the reactor) by post-reactor modification to a solid polymer particles.

The (melt) mixing step (a) of the provided polymer composition of the invention and of the preferable first and second semiconductive compositions may be carried out in a cable extruder. The step a) of the cable production process may optionally comprise a separate mixing step, e.g. in a mixer arranged in connection and preceding the cable extruder of the cable production line. Mixing in the preceding separate mixer can be carried out by mixing with or without external heating (heating with an external source) of the component(s).

Any crosslinking agent can be added before the cable production process or during the (melt) mixing step (a). For instance, the crosslinking agent and also the optional further component(s), such as additive(s), can already be present in the polymers used. The crosslinking agent is added, such as impregnated, onto the solid polymer particles, e.g. pellets.

The melt mix of the polymer composition obtained from (melt)mixing step (a) may consist of the polymer composition of the invention as the sole polymer component(s). The optional and preferable additive(s) can be added to polymer composition as such or as a mixture with a carrier polymer, i.e. in a form of so-called master batch.

The optional crosslinking can be carried out at increased temperature which is chosen, as well known, depending on the type of crosslinking agent. For instance temperatures above 150°C, such as from 160 to 350°C, are typical, however without limiting thereto.

The thickness of the insulation layer of the cable, e.g. the DC power cable such as HV DC power cable, is typically 2 mm or more, such as at least 3 mm, for example of at least 5 to 100 mm, especially from 5 to 50 mm, for instance 5 to 40 mm, e.g. 5 to 35 mm, when measured from a cross section of the insulation layer of the cable.

The thickness of the inner and outer semiconductive layers is typically less than that of the insulation layer, and in HV DC power cables can be e.g. more than 0.1 mm, such as from 0.3 up to 20 mm, 0.3 to 10 of inner semiconductive and outer semiconductive layer. The thickness of the inner semiconductive layer can be 0.3 - 5.0 mm, such as 0.5 - 3.0 mm, for example 0.8 - 2.0 mm. The thickness of the outer semiconductive layer can be from 0.3 to 10 mm, such as 0.3 to 5 mm, for example 0.5 to 3.0 mm, especially 0.8 - 3.0 mm. It is evident for and within the skills of a skilled person that the thickness of the layers of the DC cable depends on the intended voltage level of the end application cable and can be chosen accordingly.

The preferable embodiments of the invention can be combined with each other in any way to further define the invention.

The invention will now be described with reference to the following non limiting examples and figures.

Figure 1 shows DC conductivity as a function of the applied electric field for neat LDPE and blends with P3HT = 0.001 wt% and 0.0005 wt% measured according to method A below.

Figure 2 shows high-voltage charging current of LDPE/P3HT blends at 70 °C and the applied step-wise electric field and resulted current as a function of time.

Figure 3 shows charging current at the end of each 3h steps as a function of applied electric field for LDPE filled with different P3HT content measured according to method B below.

**Determination methods**

Unless otherwise stated in the description or experimental part the following methods were used for the property determinations.

Wt%: % by weight

**Melt Flow Rate**

The melt flow rate (MFR) is determined according to ISO 1133 and is indicated in g/10 min. The MFR is an

indication of the flowability, and hence the processability, of the polymer. The higher the melt flow rate, the lower the viscosity of the polymer. The MFR is determined at 190 °C for polyethylene and at 230 °C for polypropylene. MFR may be determined at different loadings such as 2.16 kg ($MFR_2$) or 21.6 kg ($MFR_{21}$).

**Comonomer contents**

a) Quantification of alpha-olefin content in low density polyethylenes by NMR spectroscopy:

The comonomer content was determined by quantitative 13C nuclear magnetic resonance (NMR) spectroscopy after basic assignment (J. Randall JMS - Rev. Macromol. Chem. Phys., C29(2&3), 201-317 (1989). Experimental parameters were adjusted to ensure measurement of quantitative spectra for this specific task.

Specifically solution-state NMR spectroscopy was employed using a Bruker Avance III 400 spectrometer. Homogeneous samples were prepared by dissolving approximately 0.200 g of polymer in 2.5 ml of deuterated-tetrachloroethene in 10 mm sample tubes utilising a heat block and rotating tube oven at 140 C. Proton decoupled 13C single pulse NMR spectra with NOE (powergated) were recorded using the following acquisition parameters: a flip-angle of 90 degrees, 4 dummy scans, 4096 transients an acquisition time of 1.6s, a spectral width of 20kHz, a temperature of 125 C, a bilevel WALTZ proton decoupling scheme and a relaxation delay of 3.0 s. The resulting FID was processed using the following processing parameters: zero-filling to 32k data points and apodisation using a gaussian window function; automatic zeroth and first order phase correction and automatic baseline correction using a fifth order polynomial restricted to the region of interest.

Quantities were calculated using simple corrected ratios of the signal integrals of representative sites based upon methods well known in the art.

b) Comonomer content of polar comonomers in low density polyethylene (1) Polymers containing > 6 wt% polar comonomer units

Comonomer content (wt%) was determined in a known manner based on Fourier transform infrared spectroscopy (FTIR) determination calibrated with quantitative nuclear magnetic resonance (NMR) spectroscopy. Below is exemplified the determination of the polar comonomer content of ethylene ethyl acrylate, ethylene butyl acrylate and ethylene methyl acrylate. Film samples of the polymers were prepared for the FTIR measurement: 0.5-0.7 mm thickness was used for ethylene butyl acrylate and ethylene ethyl acrylate and 0.10 mm film thickness for ethylene methyl acrylate in amount of >6wt%. Films were pressed using a Specac film press at 150°C, approximately at 5 tons, 1-2 minutes, and then cooled with cold water in a not controlled manner. The accurate thickness of the obtained film samples was measured.

After the analysis with FTIR, base lines in absorbance mode were drawn for the peaks to be analysed. The absorbance peak for the comonomer was normalised with the absorbance peak of polyethylene (e.g. the peak height for butyl acrylate or ethyl acrylate at 3450 $cm^{-1}$ was divided with the peak height of polyethylene at 2020 $cm^{-1}$). The NMR spectroscopy calibration procedure was undertaken in the conventional manner which is well documented in the literature, explained below.

For the determination of the content of methyl acrylate a 0.10 mm thick film sample was prepared. After the analysis the maximum absorbance for the peak for the methylacrylate at 3455 $cm^{-1}$ was subtracted with the absorbance value for the base line at 2475 $cm^{-1}$ ($A_{methylacrylate} - A_{2475}$). Then the maximum absorbance peak for the polyethylene peak at 2660 $cm^{-1}$ was subtracted with the absorbance value for the base line at 2475 $cm^{-1}$ ($A_{2660} - A_{2475}$). The ratio between ($A_{methylacrylate}$-$A_{2475}$) and ($A_{2660}$-$A_{2475}$) was then calculated in the conventional manner which is well documented in the literature.

The weight-% can be converted to mol-% by calculation. It is well documented in the literature.

Quantification of copolymer content in polymers by NMR spectroscopy

The comonomer content was determined by quantitative nuclear magnetic resonance (NMR) spectroscopy after basic assignment (e.g. "NMR Spectra of Polymers and Polymer Additives", A. J. Brandolini and D. D. Hills, 2000, Marcel Dekker, Inc. New York). Experimental parameters were adjusted to ensure measurement of quantitative spectra for this specific task (e.g "200 and More NMR Experiments: A Practical Course", S. Berger and S. Braun, 2004, Wiley-VCH, Weinheim). Quantities were calculated using simple corrected ratios of the signal integrals of representative sites in a manner known in the art.

(2) Polymers containing 6 wt.% or less polar comonomer units

Comonomer content (wt.%) was determined in a known manner based on Fourier transform infrared spectroscopy (FTIR) determination calibrated with quantitative nuclear magnetic resonance (NMR) spectroscopy. Below is exemplified the determination of the polar comonomer content of ethylene butyl acrylate and ethylene methyl acrylate. For the FT-IR measurement a film samples of 0.05 to 0.12 mm thickness were prepared as described above under method 1). The accurate thickness of the obtained film samples was measured.

After the analysis with FT-IR base lines in absorbance mode were drawn for the peaks to be analysed. The maximum absorbance for the peak for the comonomer (e.g. for methylacrylate at 1164 $cm^{-1}$ and butylacrylate at 1165 $cm^{-1}$) was subtracted with the absorbance value for the base line at 1850 $cm^{-1}$ ($A_{polar}$ comonomer - $A_{1850}$). Then the maximum absorbance peak for polyethylene peak at 2660 $cm^{-1}$ was subtracted with the absorbance value for the base line at 1850 $cm^{-1}$ ($A_{2660}$ - $A_{1850}$). The ratio between ($A_{comonomer}$-$A_{1850}$) and ($A_{2660}$-$A_{1850}$) was then calculated. The NMR spectroscopy calibration procedure was undertaken in the conventional manner which is well documented in the literature, as described above under method 1).

The weight-% can be converted to mol-% by calculation. It is well documented in the literature.

Below is exemplified how polar comonomer content obtained from the above method (1) or (2), depending on the amount thereof, can be converted to micromol or mmol per g polar comonomer as used in the definitions in the text and claims:
The millimoles (mmol) and the micro mole calculations have been done as described below.

For example, if 1 g of the poly(ethylene-co-butylacrylate) polymer, which contains 20 wt% butylacrylate, then this material contains 0.20/$M_{butylacrylate}$ (128 g/mol) = 1.56 x $10^{-3}$ mol. (=1563 micromoles).

The content of polar comonomer units in the polar copolymer $C_{polar}$ comonomer is expressed in mmol/g (copolymer). For example, a polar poly(ethylene-co-butylacrylate) polymer which contains 20 wt.% butyl acrylate comonomer units has a $C_{polar\ comonomer}$ of 1.56 mmol/g. The used molecular weights are: $M_{butylacrylate}$ = 128 g/mole, $M_{ethylacrylate}$ = 100 g/mole, $M_{methylacrylate}$ = 86 g/mole).

**Density**

Low density polyethylene (LDPE): The density was measured according to ISO 1183-2. The sample preparation was executed according to ISO 1872-2 Table 3 Q (compression moulding).

**Method for determination of the amount of double bonds in the Polymer Composition or in the polymer**

**A) Quantification of the amount of carbon-carbon double bonds by IR spectroscopy**

Quantitative infrared (IR) spectroscopy was used to quantify the amount of carbon-carbon doubles (C=C). Calibration was achieved by prior determination of the molar extinction coefficient of the C=C functional groups in representative low molecular weight model compounds of known structure.

The amount of each of these groups (N) was determined as number of carbon-carbon double bonds per thousand total carbon atoms (C=C/1000C) via:

$$N = (A \times 14) / (E \times L \times D)$$

were A is the maximum absorbance defined as peak height, E the molar extinction coefficient of the group in question ($1 \cdot mol^{-1} \cdot mm^{-1}$), L the film thickness (mm) and D the density of the material ($g \cdot cm^{-1}$).

The total amount of C=C bonds per thousand total carbon atoms can be calculated through summation of N for the individual C=C containing components.

For polyethylene samples solid-state infrared spectra were recorded using a FTIR spectrometer (Perkin Elmer 2000) on compression moulded thin (0.5-1.0 mm) films at a resolution of 4 $cm^{-1}$ and analysed in absorption mode.

<u>1) Polymer compositions comprising polyethylene homopolymers and copolymers, except polyethylene copolymers with ≥ 0.4 wt% polar comonomer</u>

For polyethylenes three types of C=C containing functional groups were quantified, each with a characteristic absorption and each calibrated to a different model compound resulting in individual extinction coefficients:

- vinyl (R-CH=CH2) via 910 $cm^{-1}$ based on 1-decene [dec-1-ene] giving E = 13.13 $1 \cdot mol^{-1} \cdot mm^{-1}$
- vinylidene (RR'C=CH2) via 888 $cm^{-1}$ based on 2-methyl-1-heptene [2-methyhept-1-ene] giving E = 18.24 $1 \cdot mol^{-1} \cdot mm^{-1}$
- trans-vinylene (R-CH=CH-R') via 965 $cm^{-1}$ based on trans-4-decene [(E)-dec-4-ene] giving E = 15.14 $1 \cdot mol^{-1} \cdot mm^{-1}$

For polyethylene homopolymers or copolymers with < 0.4 wt% of polar comonomer linear baseline correction was applied between approximately 980 and 840 $cm^{-1}$.

2) Polymer compositions comprising polyethylene copolymers with ≥ 0.4 wt% polar comonomer

For polyethylene copolymers with > 0.4 wt% of polar comonomer two types of C=C containing functional groups were quantified, each with a characteristic absorption and each calibrated to a different model compound resulting in individual extinction coefficients:

- vinyl (R-CH=CH2) via 910 $cm^{-1}$ based on 1-decene [dec-1-ene] giving E = 13.13 $1 \cdot mol^{-1} \cdot mm^{-1}$
- vinylidene (RR'C=CH2) via 888 $cm^{-1}$ based on 2-methyl-1-heptene [2-methyl-hept-1-ene] giving E = $18.24 \cdot mol^{-1} \cdot mm^{-1}$

EBA:

For poly(ethylene-co-butylacrylate) (EBA) systems linear baseline correction was applied between approximately 920 and 870 $cm^{-1}$.

EMA:

For poly(ethylene-co-methylacrylate) (EMA) systems linear baseline correction was applied between approximately 930 and 870 $cm^{-1}$.

3) Polymer compositions comprising unsaturated low molecular weight molecules

For systems containing low molecular weight C=C containing species direct calibration using the molar extinction coefficient of the C=C absorption in the low molecular weight species itself was undertaken.

B) Quantification of molar extinction coefficients by **IR** spectroscopy

The molar extinction coefficients were determined according to the procedure given in ASTM D3124-98 and ASTM D6248-98. Solution-state infrared spectra were recorded using a FTIR spectrometer (Perkin Elmer 2000) equipped with a 0.1 mm path length liquid cell at a resolution of 4 $cm^{-1}$.

The molar extinction coefficient (E) was determined as $1 \cdot mol^{-1} \cdot mm^{-1}$ via:

$$E = A / (C \times L)$$

where A is the maximum absorbance defined as peak height, C the concentration ($mol \cdot 1^{-1}$) and L the cell thickness (mm).

At least three 0.18 $mol \cdot 1^{-1}$ solutions in carbon disulphide ($CS_2$) were used and the mean value of the molar extinction coefficient determined.

**DC Conductivity Measurement**

Method A

Melt-pressed plaques with a thickness of 0.1 mm were placed between two planar electrodes (measurement electrode diameter is 28 mm) and the whole setup was placed in an oven to maintain well-defined temperatures of 30 °C or 70°C. A stepwise increasing electric potential was applied to the high-voltage electrode, which generated an electric field that stepwise increased from 10 kV/mm to 50 kV/mm. The duration of each step is 12h. The charging current (leakage current) was recorded at each electric field. The stepwise measurement was first done at 30 °C, and then another measurement on the same sample was done at 70 °C. Conductivity was calculated from the current value at the end of the second step. Figure 1 contains the conductivities at 70°C. Scheme 1 below illustrates the set up.

Method B-screening

Melt-pressed plaques with a thickness of 0.1 mm were placed between two planar electrodes (measurement electrode diameter is 28 mm) and the whole setup was placed in an oven in order to maintain a well-defined temperature

of 70°C. A stepwise increasing electric potential was applied to the high-voltage electrode, which generated an electric field that stepwise increased from 10 kV/mm to 50 kV/mm. The duration of each step is 3h. The charging current (leakage current) was recorded at each electric field. The stepwise measurement was only done at 70 °C.

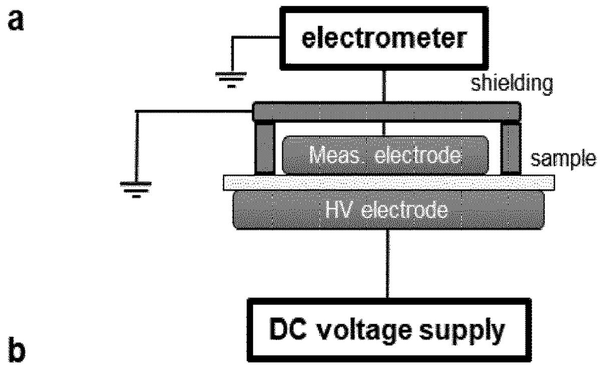


Scheme 1

**Experimental part**

The following materials were used:

**Polythiophene:** Poly(3-hexylthiophene-2,5-diyl (P3HT), a commercially available regio-regular polythiophene.

**LDPE:** LDPE homopolymer having the properties of Table 1:

Table 1: Polymer properties of LDPE

| Base Resin Properties | **LDPE** |
|---|---|
| $MFR_2$, 190°C [g/10min] | 1.95 |
| Density [$kg/m^3$] | 922.5 |

Sample Preparation - LDPE/P3HT blends used in Examples 1 and 2

LDPE (100 g/L) and P3HT (0.05 to 2 g/L) were each dissolved in p-xylene (anhydrous, purity ≥ 99 %, Sigma Aldrich) at 100 °C. The polymer solutions were mixed to obtain the desired P3HT:LDPE ratio, followed by dropwise precipitation in methanol (analytical grade, purity ≥ 99.9 %, Fisher Chemical) at 0 °C. The precipitate was collected with a filter, rinsed two times with pure methanol, and finally dried in a vacuum oven at 60 °C and an air pressure of 20 kPa overnight. Plaques with a thickness of 0.1 mm were melt-pressed between Teflon films at 150 kN force (3.75 MPa) at 150 °C, followed by cooling to room temperature at about 10 °C/ min.

**Example 1**

In order to roughly determine the relative performance of different amounts of P3HT in LDPE, the data in Figure 3 was prepared using DC conductivity method B. High-voltage charging current of LDPE/P3HT blends at 70 °C was subject to applied step-wise electric field and resulted current as a function of time (figure 2). Charging current at the end of each 3h steps as a function of applied electric field for LDPE filled with different P3HT content was then measured (figure 3). The results show that addition of 0.0005% and 0.001% P3HT offer lower DC conductivity than addition of 0.01 and 0.1 wt% of P3HT.

The data in figure 2 shows that method B, for which conductivity values are based on leakage current measured after only 3 hours, is not definitive as leakage current is still reducing after 3hrs. This means that the "true" conductivity is not fully captured. Based on these preliminary results however more accurate experiments were conducted to determine the efficacy of lower levels of P3HT.

**Example 2**

More accurate experiments were conducted to determine the efficacy of lower levels of P3HT. DC conductivity measurements were determined using method A.

Table 2: Polymer compositions of the invention and reference compositions:

| Example | Polymer Matrix | Additive | Additive amount (wt%) | E (kV/mm) | σ(S/m) method A |
|---|---|---|---|---|---|
| **CE1** | LDPE | | | 10 | 6.80E-15 |
| **CE2** | LDPE | | | 20 | 1.90E-14 |
| **CE3** | LDPE | | | 30 | 3.40E-14 |
| **CE4** | LDPE | | | 40 | 5.20E-14 |
| **CE5** | LDPE | | | 50 | 7.00E-14 |
| **IE1** | LDPE | P3HT | 0.001 | 10 | 7.00E-15 |
| **IE2** | LDPE | P3HT | 0.001 | 20 | 1.88E-14 |
| **IE3** | LDPE | P3HT | 0.001 | 30 | 3.20E-14 |
| **IE4** | LDPE | P3HT | 0.001 | 40 | 4.40E-14 |
| **IE5** | LDPE | P3HT | 0.001 | 50 | 5.30E-14 |
| **IE6** | LDPE | P3HT | 0.0005 | 10 | 4.60E-15 |
| **IE7** | LDPE | P3HT | 0.0005 | 20 | 8.20E-15 |
| **IE8** | LDPE | P3HT | 0.0005 | 30 | 1.30E-14 |
| **IE9** | LDPE | P3HT | 0.0005 | 40 | 1.98E-14 |
| **IE10** | LDPE | P3HT | 0.0005 | 50 | 2.65E-14 |

As can be seen from Table 2, polymer compositions of the inventive examples offer low conductivity, especially where the electrical field is increased. Moreover, the lower levels of the P3HT offer reduced conductivity. There appears to be an optimum level.

**Claims**

**1.** A polymer composition comprising

a) a polyethylene; and
b) a conjugated aromatic polymer;

wherein the conjugated aromatic polymer b) is present in an amount of 0.0001 to 0.005 wt% relative to the total weight of the polymer composition as a whole.

**2.** A polymer composition as claimed in any preceding claim, wherein the polyethylene a) is present in an amount of at least 95 wt%, such as 98 to 99.9999 wt%, relative to the total weight of the polymer composition as a whole; and /or wherein the conjugated aromatic polymer b) is present in an amount of 0.00025 to 0.0025 wt% relative to the total weight of the polymer composition as a whole.

**3.** A polymer composition as claimed in any preceding claim, wherein the conjugated aromatic polymer b) is present in an amount of 0.0001 to 0.0009 wt% relative to the total weight of the polymer composition as a whole.

**4.** A polymer composition as claimed in any preceding claim, wherein the polyethylene is a low density polyethylene.

**5.** A polymer composition as claimed in any preceding claim, wherein the polyethylene is an LDPE homopolymer.

**6.** A polymer composition as claimed in any preceding claim, wherein the conjugated aromatic polymer is selected from the group consisting of a polypyrrole, polyindole, polyazepine, polythiophene, polyfurane, polyselenophene, polythienothiophene, polybenzodithiophene, polycyclopentadithiophene, and polydithieno-pyrrole or mixtures thereof, preferably polypyrrole, polythiophene, or polyfurane.

7. A polymer composition as claimed in any preceding claim, wherein the conjugated aromatic polymer is a polythiophene, such as poly (3-hexylthiophene-2,5-diyl).

8. A polymer composition as claimed in any of claim 7, wherein the polythiophene has the general formula(I):

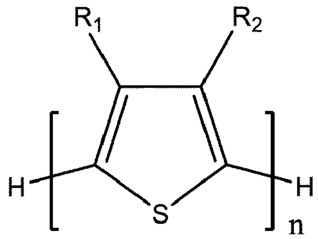

(I)

wherein $R_1$ and $R_2$ are each independently selected from the group consisting of hydrogen, halo (e.g. fluoro), alkoxy, linear or branched $C_{1-20}$ alkyl group or a $C_{3-12}$ cycloalkyl group and optionally substituted $C_{6-20}$ aryl groups; and wherein n is an integer in the range 2 to 1000.

9. A polymer composition as claimed in claim 8, wherein $R_1$ and $R_2$ are selected from the group consisting of hydrogen and a linear $C_{1-20}$ alkyl group, such as hexyl, preferably wherein $R_1$ is hydrogen and $R_2$ is hydrogen or hexyl.

10. A polymer composition as claimed in any preceding claim wherein the polymer composition is non crosslinked.

11. A polymer composition as claimed in any preceding claim, wherein the conductivity of the polymer composition is 1.0E-13 S/cm or less when measured according to DC conductivity method as described under "Determination Methods".

12. A cable comprising one or more conductors surrounded by at least an insulation layer, wherein said insulation layer comprises a polymer composition as defined in any of claims 1 to 11.

13. A cable as claimed in claim 12, which is a power cable, preferably a direct current (DC) power cable.

14. A process for producing a cable as claimed in claim 12 or 13, comprising the steps of:

- applying on a conductor, preferably by (co)extrusion, at least an insulation layer, wherein the insulation layer comprises a polymer composition as defined in any of claims 1 to 11.

15. The use of a polymer composition as defined in any of claims 1 to 11 in the manufacture of an insulation layer in a cable, preferably a DC cable.

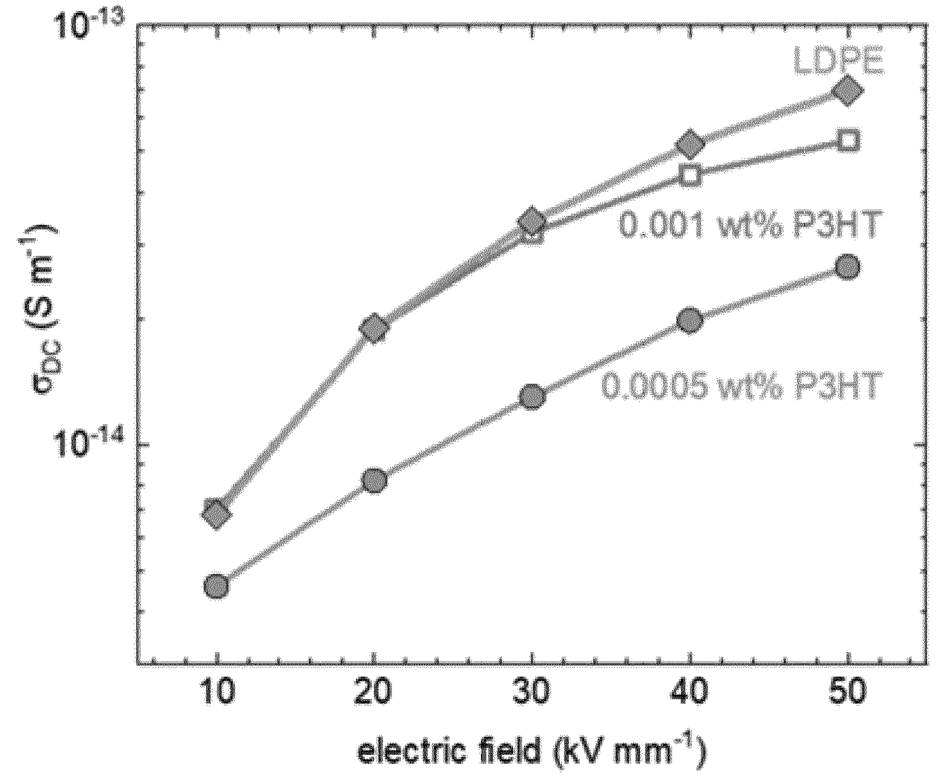


Figure 1

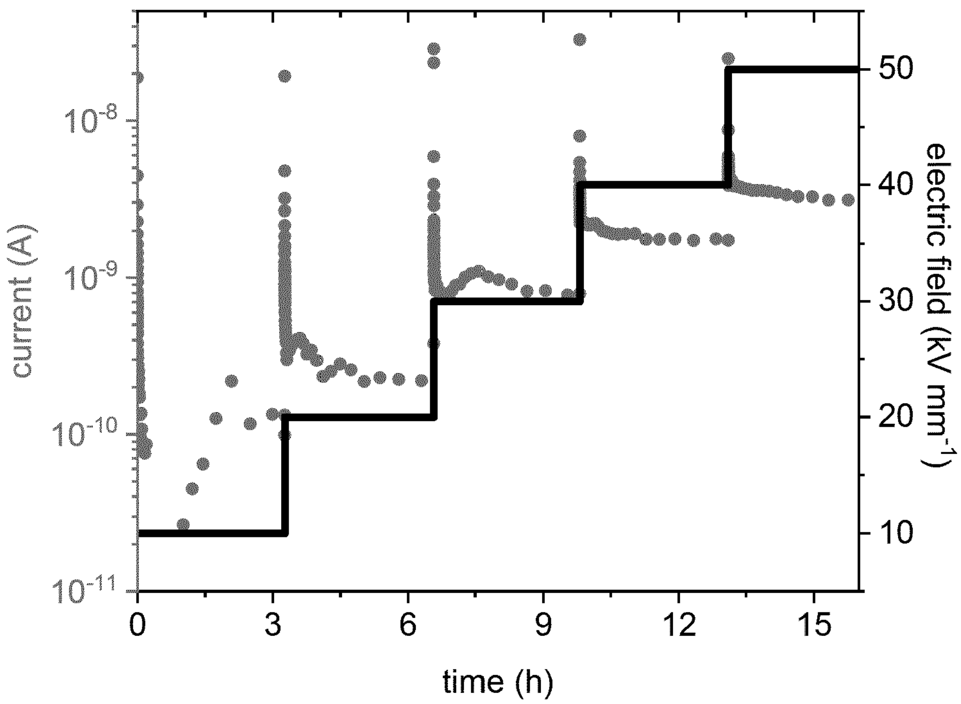


Figure 2

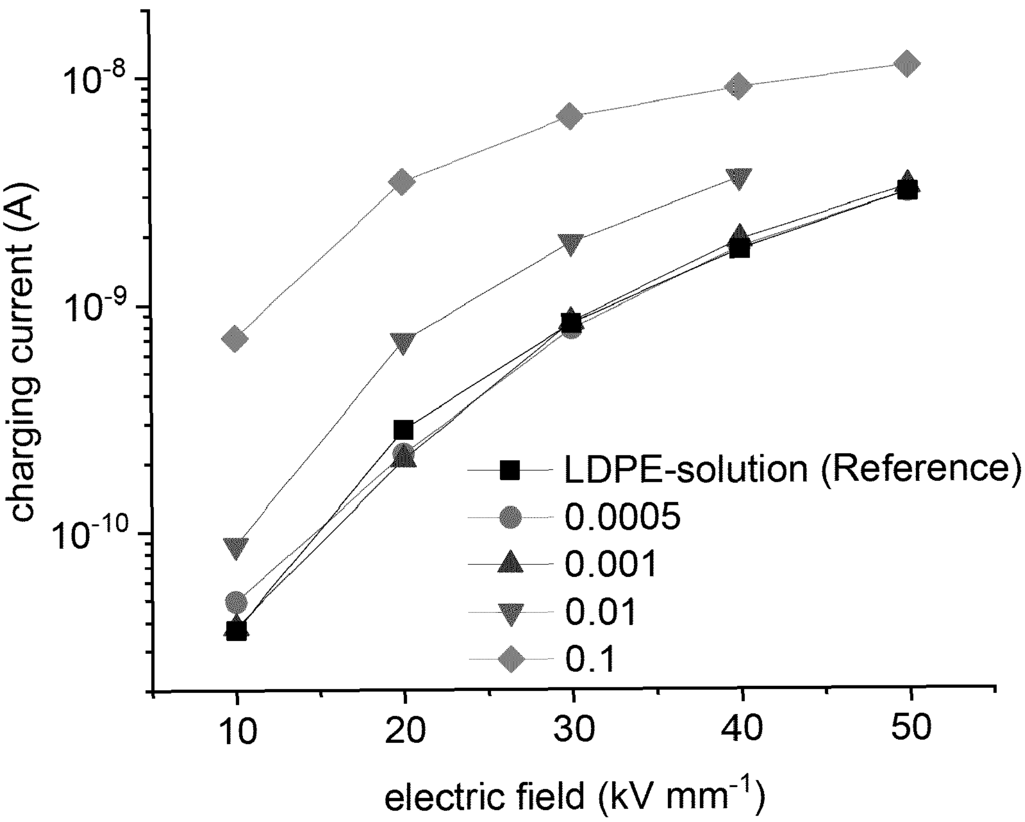

charging current (A)
10-8
10-9
10-10
LDPE-solution (Reference)
0.0005
0.001
0.01
0.1
10
20
30
40
50
electric field (kV mm-1)


Figure 3

Europäisches Patentamt
European Patent Office
Office européen des brevets

# EUROPEAN SEARCH REPORT

Application Number
EP 20 21 6701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2017/220616 A1 (BOREALIS AG [AT]) 28 December 2017 (2017-12-28)<br>* the whole document *<br>----- | 1-15 | INV.<br>H01B3/44<br>C08L23/04<br>H01B9/00<br><br>ADD.<br>H01B1/24<br>H01B13/14 |
| A | QING-HUA ZHANG ET AL: "Electrically conductive, melt-processed ternary blends of polyaniline/dodecylbenzene sulfonic acid, ethylene/vinyl acetate, and low-density polyethylene",<br>JOURNAL OF POLYMER SCIENCE PART B: POLYMER PHYSICS,<br>vol. 42, no. 20,<br>15 October 2004 (2004-10-15), pages 3750-3758, XP055312162,<br>US<br>ISSN: 0887-6266, DOI: 10.1002/polb.20241<br>* the whole document *<br>----- | 1-15 | |
| A | CN 105 061 859 A (ANHUI TELECOM DEVICE TRADE INDUSTRY CO LTD)<br>18 November 2015 (2015-11-18)<br>* the whole document *<br>----- | 1-15 | |

| TECHNICAL FIELDS SEARCHED (IPC) |
|---|
| H01B<br>H05B<br>C08L |

The present search report has been drawn up for all claims

1

| Place of search | Date of completion of the search | Examiner |
|---|---|---|
| Munich | 1 June 2021 | Marsitzky, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 21 6701

This annex lists the patent family members relating to the patent documents cited in the above-mentioned European search report. The members are as contained in the European Patent Office EDP file on
The European Patent Office is in no way liable for these particulars which are merely given for the purpose of information.

01-06-2021

| Patent document cited in search report | Publication date | Patent family member(s) | Publication date |
|---|---|---|---|
| WO 2017220616 A1 | 28-12-2017 | CN 109328211 A | 12-02-2019 |
| | | EP 3472237 A1 | 24-04-2019 |
| | | US 2019233627 A1 | 01-08-2019 |
| | | WO 2017220616 A1 | 28-12-2017 |
| CN 105061859 A | 18-11-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017220616 A
- WO 9308222 A


### Non-patent literature cited in the description


- Encyclopedia of Polymer Science and Engineering. 1986, vol. 6, 383-410
- Polyethylene: High-pressure, R.Klimesch, D.Littmann and F.-O. Mähling. Encyclopedia of Materials: Science and Technology. Elsevier Science Ltd, 2001, 7181-7184
- **J. RANDALL.** *JMS - Rev. Macromol. Chem. Phys.,* 1989, vol. C29 (2&3), 201-317
- **A. J. BRANDOLINI ; D. D. HILLS.** NMR Spectra of Polymers and Polymer Additives. Marcel Dekker, Inc, 2000
- **S. BERGER ; S. BRAUN.** 200 and More NMR Experiments: A Practical Course. Wiley-VCH, 2004